# EUROPEAN PATENT SPECIFICATION

(11) **EP 1 050 817 B1**
(45) Date of publication and mention of the grant of the patent: **29.01.2003**
(21) Application number: 00401226.6
(22) Date of filing: 05.05.2000
(51) Int. Cl.: G06F 11/273

(54) **Apparatus and method for testing software modules**
Vorrichtung und Verfahren zum Testen von Softwaremodulen
Dispositif et procédé pour tester des modules de logiciel

(30) Priority: 07.05.1999 FR 9906051
(43) Date of publication of application: 08.11.2000
(73) Proprietor: THOMSON multimedia, 92100 Boulogne Billancourt (FR)
(72) Inventor: Harzo, Serge, 92648 Boulogne Cedex (FR); Crespel, Denis, 92648 Boulogne Cedex (FR); Le Prince, Patrick, 92648 Boulogne Cedex (FR); Steyer, Jean-Marie, 92648 Boulogne Cedex (FR)
(74) Representative: Kohrs, Martin

(56) References cited:
- US-A- 5 148 435

## Description

The present invention concerns the field of software maintenance and relates more especially to the recovering of operational or error information from software modules of a piece of software carried on board a digital apparatus, more especially a digital decoder, a television receiver, a disk reader/recorder.

Digital apparatuses are increasingly comprising a platform which includes subassemblies (or cards) based on microprocessors managed by an operating system and thus allowing the exploitation of on-board software of ever increasing complexity.

During the phase of development of the software carried on board the as yet physically open digital apparatus, developers have available technical means for tailoring and debugging the cards, and commonly referred to as the development environment (Ethernet loading network, built-in debugger allowing step-by-step simulation of the operation of the software).

Once the tailoring and debugging tests have been carried out, the hardware platform is factory-manufactured and after building in the software, the apparatus is closed.

Existing digital apparatuses include external communication ports (serial, parallel, modem). The behaviour of the on-board software can be monitored by reading a stream of information written to one of these ports and testing the operation of a collection of software modules. Here, the expression software module should be understood to mean a collection of instructions and of source code dedicated to the operation of a piece of hardware. The reading of this stream of information is achieved by connecting for example a microcomputer furnished with a monitor up to this latter port, thus allowing visualization of the behaviour of the software.

This writing to the selected port has hitherto depended on the version of the software. This is because only directives for compilation during the formulation of the software make it possible to determine the subgroup or subgroups of software modules whose behaviour one wishes to ascertain.

However, if one desires to obtain an information item in the aforesaid stream of information apprising of the operation of one or more given software modules, the complete software must be rebuilt so as to incorporate the new information item and then reloaded into the apparatus. This reloading of the software is done for example by the user writing the tests of the requisite software modules into the source code. These regular updates are tedious, expensive and lengthy (duration of writing of the tests) and require the user to undertake a particular action in order to introduce the new version of the software.

Furthermore, the newly introduced new information item may be intrusive and may change the behaviour of the software.

The purpose of the invention is to circumvent the aforesaid drawbacks by proposing a process for recovering operational information originating from software modules of a piece of software carried on board a digital apparatus, which can be executed while the apparatus is operating when the user wishes to apprise himself regarding the operation of at least one software module, and which does not require the reloading of the complete software.

The subject of the invention is therefore a method for determining test information for software modules in a digital device, said test information being determined through the execution of test functions, characterized in that said device containing a plurality of flags, each flag being associated with a software module, each software module being associated with at least one test function held in a reprogrammable memory (8) in said digital device 13, said method comprising the steps of:
executing a test function as a function of the value of the flag associated with the corresponding software module;
providing resulting test information for access by a user.

In this way, the user now merely needs to enable to the active value, for example 1, the flags corresponding to the software modules whose operation he wishes to ascertain. This enabling allows the possibility of executing the test functions associated with the desired software modules. Thus, the process according to the invention avoids modifications to the source code of the software (compilation, link editing) by the user and the reloading of the software into the digital apparatus. The invention makes it possible to obtain a dynamic process since it is one which can be executed during operation, and one which is selective since it can recover the operational information item desired by the user.

According to one embodiment, the process comprises the step of setting the value of said flags through an external connection of said device.

The subject of the invention is also a digital device comprising software modules and test functions for determining test information relating to said software modules, characterized in that it comprises:
a memory for holding flags, each flag being associated with a software module and at least one test function held in a reprogrammable memory (8) in said digital device 13,
means for launching execution of a test function depending on the value of the corresponding flag.

The means for launching the execution of the test functions may be a microprocessor.

Thus, the apparatus according to the invention is noteworthy through the alterability of the memory which it includes. This memory, as previously explained, makes it possible to customize the test information the user wishes to obtain regarding the software modules of the on-board software.

According to one embodiment, the said library furthermore includes an information item for indicating the output port of the digital apparatus on which the test information is available.

According to one embodiment, the number of functional software layers making up the piece of software is equal to the number of libraries, each of the libraries being stored at a specific address in the nonvolatile memory.

According to one embodiment, at least part of said flags possess a default value to which they are initialized upon occurrence of a specific event such as a device reset. Thus, this characteristic allows the apparatus to be returned to a standard status each time the current is interrupted, for example.

According to one embodiment, the apparatus belongs to the group comprising a digital decoder, a digital television receiver, a digital disk reader and/or recorder.

Other characteristics and advantages of the present invention will emerge from the description of the exemplary embodiment which follows, taken by way of non-limiting example, with reference to the appended figures in which:
- Figure 1 represents a development environment involving a workstation and a decoder,
- Figure 2 represents a library or string of binary elements according to the invention in the form of bits.

To simplify the description, the same references will be used to designate elements fulfilling identical functions.

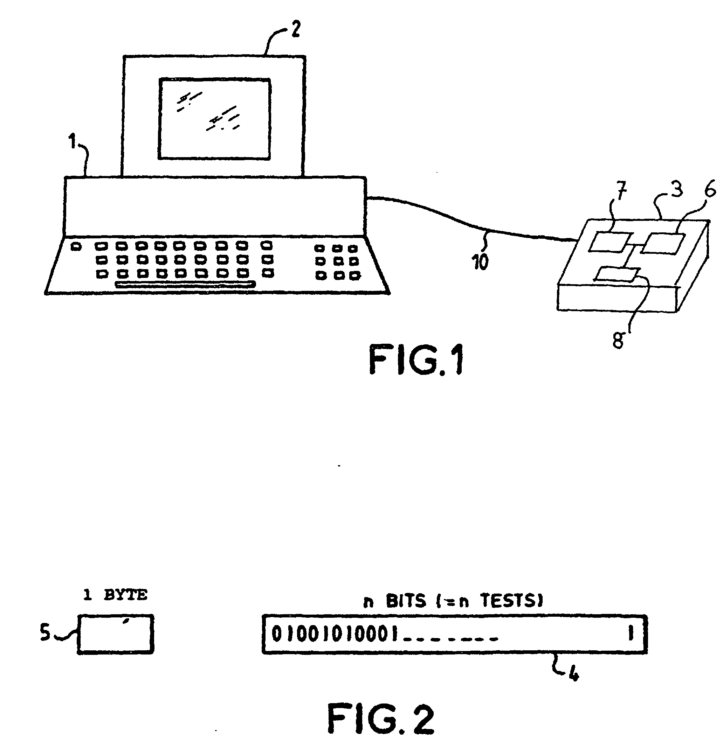

In Figure 1, a user workstation, in the form of a computer 1 furnished with a monitor 2, is linked by a serial line 10 to a digital decoder 3.

In this instance, the connection of the computer 1 with the decoder 3 is effected by way of a protocol for exchanging data over the serial line. The decoder detects the presence of the computer 1 and configures itself into slave mode. Thereupon, the user can parametrize in a nonvolatile memory 6 of EEPROM type the software modules whose operation he wishes to ascertain according to the mode of operation described hereinbelow. The writing to and reading from memory 6 is carried out through a microprocessor 7. A reprogrammable memory 8 holds the code for the test functions and software modules.

Figure 2 represents a string 4 of n bits able to take the values 0 and 1. The user accesses this string located for example in the EEPROM memory by way of the serial link connected to the computer and of a communication protocol understood by the two parties and known per se. According to a variant, the user accesses it via a hidden menu internal to the decoder.

The software carried on board the decoder is constructed in software layers; this is why the partitioning of the information to be received by the user can be done per software group, for example the group of driver software, of user interface software and other software referred to as "middleware". There will therefore be as many strings 4 as software groups. Each string 4 is stored in the EEPROM memory at a specific address and includes the following elements:
- a field of n bits. The bit of index j corresponds to test function j of the relevant group. If it is at 0, the test is inactive, which means to say that the test function will not call any function in the associated software module during the execution of the software. In the contrary case, if the bit is at 1, the test is active, which means to say that the test function (function usually referred to as "Trace" known to the person skilled in the art) will call the functions of the module (e.g.: Connect, Disconnect modem module functions), the execution of which will yield an operational status or error information item. These bits have been input by the user so that he can select the desired test functions and thus to obtain the information regarding the corresponding software modules.

A byte specifying the type of output on which the information desired by the user and relating to the relevant software group will be available. It is possible to imagine that the respective values of this byte designate a serial-channel output, an output on the parallel port and no output. Thus, the collection of activated tests of the group will dispatch the result of their respective tests on the specified port. If no output has been requested, there will be disabling of the result of the tests.

For example, the "driver software" group is defined as possessing five software modules to be monitored which are as follows: the modem, the chip card reader, the cable return channel, the video module and the audio module. One chooses to activate only the modem test function by setting the bit of index 1 of the string to the value 1, to deactivate the other test functions of the other software modules by allocating the value 0 to the other bits of the string, and to route the information resulting from the tests activated on the modem module to the serial port by setting the first byte to the value 01. It will then be possible for the computer 1 to acquire this information via the serial line. This information will be delivered on the screen of the computer, namely in the form of a string of characters of the type: "modem connected", "error: carrier lost", "line problem", etc. It will be noted that one and the same test function, such as defined in the present application, will be able to provide a series of results.

According to a variant, it will be possible to display the results of the tests in some other format interpretable by the user. For example, two bytes displayed on the screen as the result of a test will provide the type of enquiry and its result respectively. Thus, according to this exemplary coding of the results, the displaying of "01 00" will be interpretable as a successful connection of the modem (01: modem connection; 00: successful). This variant makes it possible to reduce the quantity of information exchanged.

Once the desired test functions and type of output have been input into the string 4, the user can see other results displayed, originating from the executing of other tests. This is because, in addition to the activated test functions which are constantly generated during execution of the software displaying corresponding results, the system diagnosis function, known per se, which is performed only once after the software programming phase, can also output a result on the screen. Likewise, test functions can be run regularly so as to provide textual diagnosis for example periodically.

The invention is of course not limited to the embodiments described in the present application. For example, instead of a digital decoder, it would have been possible to imagine any other digital apparatus which includes on-board software comprising software modules, such as in particular a digital television receiver, a digital disk reader and/or recorder. Likewise, the nonvolatile memory can also be a FLASH memory.

Although according to the present embodiment, a binary value determines the execution of a test function, the invention is not limited to such an embodiment. In particular, a binary item may designate several test functions to be executed. A test function may also test more than one software module.

## Claims

1. Method for determining test information for software modules in a digital device (3), said test information being determined through the execution of test functions, **characterized in that** said device containing a plurality of flags (4), each flag being associated with a software module, each software module being associated with at least one test function held in a reprogrammable memory (8) in said digital device 13, said method comprising the steps of:
executing a test function as a function of the value of the flag associated with the corresponding software module;
providing resulting test information for access by a user.

2. Process according to claim 1, further comprising the step of setting the value of said flags through an external connection (10) of said device.

3. Process according to claims 1 or 2, further comprising the step of displaying the value of said flags (4) trough a control menu of said device.

4. Digital device (3) comprising software modules and test functions for determining test information relating to said software modules, **characterized in that** it comprises:
a memory (6) for holding flags (4), each flag being associated with a software module and at least one test function held in a reprogrammable memory (8) in said digital device 13;
means (7) for launching execution of a test function depending on the value of the corresponding flag (4).

5. Device according to claim 4, wherein said flags (4) are organized in groups relating to software module types.

6. Device according to claim 4 or 5, wherein said memory (6) further comprises an information item (5) indicating an output port of said device for outputting said test information.

7. Device according to one of the claims 4 to 6, wherein at least part of said flags (4) possess a default value to which they are initialized upon occurrence of a specific event such as a device reset.

8. Device according to one of the claims 4 to 7, further comprising an interface (10) for accessing and modifying the values of the flags (4).

## Patentansprüche

1. Verfahren zur Ermittlung von Testinformationen für Software-Module in einem digitalen Gerät (3), wobei die Testinformationen durch die Ausführung der Testfunktionen ermittelt werden,
**dadurch gekennzeichnet, dass**
das Gerät mehrere Markierungen (4) enthält, dass jede Markierung zu einem Software-Modul gehört, dass jedem Softwaremodul wenigstens eine Testfunktion zugeordnet ist, die in einem neu-programmierbaren Speicher (8) in dem digitalen Gerät gehalten wird, mit folgenden Schritten:
Ausführung einer Testfunktion als Funktion des Wertes der dem entsprechenden Software-Modul zugeordneten Markierung,
Bereitstellung resultierender Testinformationen für den Zugriff durch einen Benutzer.

2. Verfahren nach Anspruch 1 mit dem Schritt der Einstellung des Wertes der Markierungen über einen externen Anschluss (10) des Gerätes.

3. Verfahren nach Anspruch 1 oder 2 mit dem Schritt der Wiedergabe des Wertes der Markierungen (4) über ein Steuermenü des Gerätes.

4. Digitales Gerät (3) mit Software-Modulen und Testfunktionen zur Ermittlung von Testinformationen für die Software-Module,
**gekennzeichnet durch:**
einen Speicher (6) zum Halten der Markierungen (4), wobei jeder Markierung ein Software-Modul und wenigstens eine Testfunktion zugeordnet ist, die in einem neu-programmierbaren Speicher (8) in dem digitalen Gerät gehalten wird,
Mittel (7) zum Starten der Durchführung einer Testfunktion abhängig von dem Wert der entsprechenden Markierung (4).

5. Gerät nach Anspruch 4, wobei die Markierungen (4) in Gruppen organisiert sind, die sich auf die Typen der Software-Module beziehen.

6. Gerät nach Anspruch 4 oder 5, wobei der Speicher (6) außerdem eine Information (5) enthält, die einen Ausgangsanschluss für das Gerät zur Ausgabe der Testinformationen anzeigt.

7. Gerät nach einem der Ansprüche 4 bis 6, wobei wenigstens ein Teil der Markierungen (4) einen Ausgangswert aufweist, auf den sie beim Auftreten eines speziellen Ereignisses wie eines Rücksetzens des Gerätes initialisiert werden.

8. Gerät nach einem der Ansprüche 2 bis 7 mit einer Schnittstelle (10) für den Zugriff und die Modifikation der Werte der Markierungen (4).

## Revendications

1. Procédé permettant de déterminer des informations de test pour des modules de logiciel dans un dispositif numérique (3), lesdites informations de test étant déterminées via l'exécution de fonctions de test, **caractérisé en ce que** ledit dispositif contient plusieurs indicateurs (4), chaque indicateur étant associé à un module de logiciel, chaque module de logiciel étant associé à au moins une fonction de test contenue dans une mémoire reprogrammable (8) dans ledit dispositif numérique, ledit procédé comportant les étapes suivantes :
exécution d'une fonction de test comme fonction de la valeur de l'indicateur associé au module de logiciel correspondant ;
mise à disposition des informations de test obtenues pour accès par un utilisateur.

2. Procédé selon la revendication 1, comportant en outre l'étape de définition de la valeur desdits indicateurs via une connexion externe (10) audit dispositif.

3. Procédé selon la revendication 1 ou 2, comportant en outre l'étape d'affichage de la valeur desdits indicateurs (4) via un menu de commande dudit dispositif.

4. Dispositif numérique (3) comportant des modules de logiciel et des fonctions de test pour déterminer des informations de test relatives auxdits modules de logiciel, **caractérisé en ce qu'**il comporte :
une mémoire (6) contenant des indicateurs (4), chaque indicateur étant associé à un module de logiciel et à au moins une fonction de test contenue dans une mémoire reprogrammable (8) dans ledit dispositif numérique,
un dispositif (7) permettant de lancer l'exécution d'une fonction de test en fonction de la valeur de l'indicateur (4) correspondant.

5. Dispositif selon la revendication 4, dans lequel lesdits indicateurs (4) sont organisés en groupes se rapportant à des types de modules de logiciel.

6. Dispositif selon la revendication 4 ou 5, dans lequel ladite mémoire (6) comporte en outre un élément d'information (5) indiquant un port de sortie dudit dispositif pour la sortie desdites informations de test.

7. Dispositif selon l'une des revendications 4 à 6, dans lequel au moins une partie desdits indicateurs (4) possède une valeur par défaut à laquelle ils sont réinitialisés à l'apparition d'un événement spécifique tel qu'une réinitialisation du dispositif.

8. Dispositif selon l'une des revendications 4 à 7, comportant en outre une interface (10) pour l'accès aux valeurs des indicateurs (4) et leur modification.
